# EUROPEAN PATENT SPECIFICATION

(11) **EP 0 943 415 B1**
(45) Date of publication and mention of the grant of the patent: **22.05.2002**
(21) Application number: 97902706.7
(22) Date of filing: 17.02.1997
(51) Int. Cl.: B29C 53/04, C08J 5/00

(54) **METHOD FOR MANUFACTURING ARTIFICIAL STONE**
VERFAHREN ZUR HERSTELLUNG VON KUNSTSTEINEN
PROCEDE DE FABRICATION DE PIERRE ARTIFICIELLE

(43) Date of publication of application: 22.09.1999
(73) Proprietor: Doppel Co. Ltd., Tokyo 102-0085 (JP)
(72) Inventor: SAKAI, Mieko, Chiyoda-ku Tokyo 102 (JP)
(74) Representative: Calamita, Roberto
(86) International application number: JP9700416
(87) International publication number: WO9835816

(56) References cited:
- EP-A- 0 599 371
- EP-A- 0 599 586
- CH-A- 461 081
- GB-A- 636 982
- US-A- 2 505 342
- PATENT ABSTRACTS OF JAPAN vol. 018, no. 482 (C-1247), 8 September 1994 (1994-09-08) & JP 06 157102 A (MIEKO SAKAI), 3 June 1994 (1994-06-03)
- CD-ROM OF THE SPECIFICATION AND DRAWINGS ANNEXED TO THE WRITTEN APPLICATION OF JAPANESE UTILITY MODEL, Application No. 45281/1991 (Laid-Open No. 128815/1992) (KAYO HARA) 25 November 1992.

## Description

### TECHNICAL FIELD

The invention of this application is one relating to a method for manufacturing artificial stone. More particularly, the invention of this application is one relating to a method for manufacturing artificial stone useful as wall material, flooring material, other building material, and furniture material, having good feel of granite tone, marble tone, etc. and good characteristic properties of surface hardness, wear resistance, etc., light in weight and good in strength, and formed in curved surface or deformed shape.

### BACKGROUND ART

Hitherto, a method of crushing natural stone in adequate size, mixing this with a resin etc., casting this into a mold frame and hardening, and grinding and fabricating, according to need, into artificial stone has been known. Such a method is disclosed in EP-A-0 599 586. And, regarding such artificial stone, devices have been variously made about the formulating ratio of components of resin etc. and natural stone, the kind of these components, and the condition on production such as depressuring and pressuring or temperature control.

For example, regarding resin to be mixed with crushed product of natural stone, using unsaturated polyester and methyl methacrylate (MMA) resin has been proposed, and regarding the entire composition, artificial stone composed of an inorganic small particle component of large particle diameter and an inorganic fine particle component of small particle diameter, and a resin component of a small ratio lower than 15 wt% of the total amount, has also been developed by the inventors of this application.

In the case of this newly developed artificial stone, making the best use of the feature that the use amount of the resin component as the binder is small, using fine particle body of natural stone etc., the obtained product having a dense structure, realizing a color tone with a transparent feel and a color tone with a deep feel, and yet being superior in moldability despite the small use amount of the resin component, and attracting attention as one capable of molding into arbitray shapes.

However, despite such conventional devices, regarding the molding of artificial stone to curved surfaces and the molding to more complex deformed shapes, subjects to be improved have been left.

The reason for this is that regarding the curved surface molding (R-type molding) , for example, the method of casting into a curved-surface-like mold and hardening, and polish-fabricating afterward, and the method of polish-fabricating after the cutting out by R-shaped slice fabrication are known, but the polish fabrication of the curved surface state is very expensive, raising the product price, and prevented the diffusion of practical use.

As the improvement method, a method of heat-softening and bend fabricating after polish fabricating the plate-like forming body has been proposed, but in the conventional methods, a serious defect has occurred that air bubbles remaining inside the forming body and residual monomer of the resin component expand by heating, locally deforms the softened part, and whitens the product.

Like this, in the conventional technology, there is a problem that it is impossible to produce artificial stone product formed to curved surface and deformed shape simply at a low cost, without causing deformation and whitening, and there was a subject to be improved immediately in this regard.

### DISCLOSURE OF THE INVENTION

The invention of this application is one carried out to solve the problem mentioned above, and, as the means to solve the problem, offers a method for manufacturing artificial stone having a curved surface or a deformed shape comprising the steps of heating a plate-like artificial stone forming body whose surface has been polished or roughened to a temperature ranging from 120°C to 200°C under a pressurized atmosphere equal to or higher than 3 atms so as to soften and deform it to a predetermined curved surface or deformed shape and cooling it to a temperature not higher than 90°C.

And, the invention of this application, in the above-mentioned method, offers also a method for installing a pedestal having a predetermined curved surface or deformed shape in a pressurized container, and deforming the forming body which has been softened with heating to the pedestal shape by its own weight or by supplementary pressing.

### BRIEF DESCRIPTION OF DRAWINGS

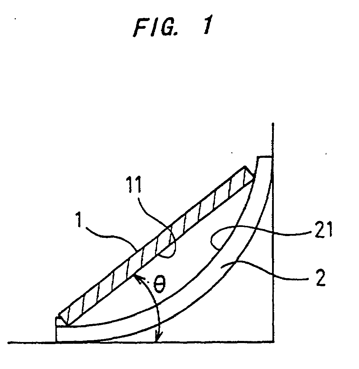

Fig. 1 is a schematic diagram showing an example which uses deformation by the own weight of the forming body and a pedestal therefor, as the method of this invention.

### BEST MODE FOR CARRYING OUT THE INVENTION

Regarding the invention of this application, an explanation is given in more detail in the following.

In the manufacturing method of this invention, regarding the plate-like forming body of artificial stone, its surface is previously mirror-polished or roughened. And, it follows that the forming body after polishing or roughening is heated and softened under a pressurized atmosphere. The pressurizing atmosphere at this time is indispensable to suppress the expansion or vaporization of air bubbles or residual monomer remaining in the artificial stone, and should be a pressurized atmosphere not lower than 3 atms, more generally, not lower than 3 atms and not higher than about 10 atms. This pressurized atmosphere can be formed as the action by a compressor to the inside of the container.

The pressurized atmosphere like this is maintained in either cases when the plate-like forming body which has been polished is softened and deformed by heating to a temperature not lower than 120°C and not higher than 200°C and at the time of cooling to a temperature not higher than 90°C. Pressuring can utilize a compressive gas such as air and inert gas, steam etc. as the medium.

Also, as the heating means for softening and deforming, carrying out electrically or by the atmosphere gas is considered. As the electrical means, various methods such as resistance heating, infrared, high frequency, induction heating, etc. are acceptable.

In the softening and deformation by heating, it is possible to install a pedestal having its shape in a pressurized container so that it becomes the predetermined curved surface or deformed shape and cause it to soften and deform by the own weight of the forming body which softens or by the use of a means to guide deformation.

For example, Fig. 1 attached hereto is one illustrating the method by softening and deforming by the own weight, illustrating the case of installing in a pressure container a pedestal (2) having a predetermined curved surface (21), heating and softening a plate-like forming body (1) of artificial stone, and causing the plate-like forming body (1) to deform and mold to the shape of the curved surface (21) installed on this pedestal (2).

The treating surface (11) previously mirror-polished or roughened is caused to oppose to the curved surface (21) of predetermined shape of the pedestal (2) and moreover in order that this curved surface (21) as a whole is inclined, the pedestal (2) itself is disposed aslant.

For example, in the case like this method, too, by heating in the pressurized atmosphere, uniform pressure is applied to the forming body (1) to suppress the expansion of bubbles and residual monomer in its inside. And, at the time of cooling after the completion of deformation, whitening in the cooling process is prevented by making it the pressurized atmosphere.

The pressurized atmosphere can be constructed as a pressurized chamber partitioned by rigid walls, and heating means may be arranged at an adequate place of floor, wall, etc. of the pressure chamber, and heated pressuring atmosphere gas may be introduced.

The speed of temperature rise, temperature fall at the time of heating or cooling is not specifically restricted, but not lower than 10°C/min is desirable if productivity is taken into account. It is desirable that the atmosphere pressure is released when the temperature has been lowered to 90°C, preferably when lowered to a temperature not higher than 70°C at the time of cooling.

Regarding the plate-like forming body (1), in general, its thickness is desirably in the range of 5-30 mm or so, its size can be made 100 × 100 mm ∼ 1500 × 1500 mm or so.

In the case of using the pedestal (2) as in Fig. 1, its inclined arrangement is effective, its reason is that it is possible to certainly obtain the demanded shape by deforming sequentially from the lower part to which an added weight is applied. Regarding the slope at this time, it is possible to make it a standard that the angle of inclination (θ) of the forming body (1) of Fig. 1 becomes about 30-70°.

Incidentally, regarding the pedestal (2), its material may be metal, ally, ceramics, or heat-resistant resin, or further an adequate one of their compound material. And the pedestal (2) may be a single one or that of dividable type. In the case of dividable mold, it is permissible to assemble in the stage of using this.

Depending on the size of the capacity of the pressurized atmosphere, it is permissible to place a plurality of, or further a large number of pedestals (2) in this atmosphere and to form curved surface by heating and softening a plurality of plate-like forming bodies (1) at one time.

Regarding the composition itself of the artificial stone, it is possible to make it the one etc. which the inventors of this invention have already proposed.

For example, the raw material constituting the artificial stone of this invention is divided broadly into 3 components. One as the principal component is an inorganic small particle component of the size of 10∼70 mesh, this being that an adequate inorganic small particle component from minerals such as silicastone, olivine, feldspar, pyroxene, and mica, natural stone such as granite and metamorphic rocks, porcelain, glass, metal, etc. is used.

Also, a fine particle component of 100 mesh under is used together with this small particle component. As this fine particle component, natural or artificial various fine particle components are enumerated. For example, calcium carbonate, aluminum hydroxide, etc. are fine particle components that can be obtained easily.

Also, as a part of this fine particle component, it is permissible to add and formulate a component of manganese dioxide, titanium dioxide, zirconium silicate, iron oxide, etc. for the adjustment of color tone, or a component of antimony trioxide, boron compound, bromine compound, etc. to impart flame retardance.

There is a resin component as the third component. The resin component can be selected over a broad range among from thermosetting ones.

For example, acrylic resin, methacrylic resin, unsaturated polyester resin, etc. are exemplified. Among other, methacrylic resin is suitable from the point of clarity, hardness, and strength.

The fine particle component of natural stone etc. functions as an important factor for the external appearance and physical properties of the artificial stone obtained. Especially, on exposing a part, it becomes an important factor of the color and pattern on the external appearance in conjunction of other components.

The fine particle component is considerably smaller as compared with the small particle component than 100 mesh level, enters between individual particles of the small particle component, taking position so as to fill space among particles, contributes to obtaining such properties as hardness and flexibility of the artificial stone obtained. It is preferable that the small particle component and this fine particle component are 0.5:1 ∼ 5:1 in its weight ratio.

Also, the resin component contributes to enclosing these and binding the whole for the small particle component of natural stone etc. which is the component to form the skeleton mentioned above and the fine particle component, has a function to impart elasticity or tensile strength to the product when the artificial stone is completed.

In this invention, the constitutional ratio of these components is important. What is particularly important is the constitutional ratio of the resin component and other components. In this invention, it is one feature to make possible high-density products having a compact structure, high-density herein implying that the small particle component and fine particle component contained in the product of artificial stone are present at a high density, its degree is, for example, higher than a density 2.2 g/cm³, which exceeds the range contained in the conventional artificial stone.

That is, the more the constitutional ratio in the product of the small particle component of natural stone etc. which is the skeleton component, the closer to natural stone, however, if too much, it does not become one which has solidified, it is impossible to use as the product. And the physical properties of the produce to be obtained become one which is poor, it does not endure use by the ordinary using method.

Also, in addition to a trouble of not solidifying even when the fine particle component is used in large amounts, the one obtained is lusterless and something that cannot be called stone.

Therefore, the ratio of use amount of the small particle component and fine particle component is restricted. That is, it should be not less than 85%, preferably not less than 90% by weight. Incidentally, in case of more than 95%, the product becomes brittle, it is only possible to obtain one which is difficult to use. Also, if less than 85%, the product is too soft and the stone-like properties cannot be obtained, the use range becomes the range similar to the resin plate.

It follows from this that one other than fine particle component and small particle component of natural stone etc., or the resin component, should not be present in excess of 15% by weight at most in the product.

When the resin component exceeds 15% or so, the product becomes plastic-like, merely having a nominal outward appearance of natural stone. And, excessively reducing the resin component increases the appearance properties close to natural color of the product, but one the other hand, the product becomes one which is brittle and it becomes unsuitable for use. From this point of view, it is more preferable that the resin component becomes 3∼10 wt%.

And, in the artificial stone as the product and artificial stone composition of this invention, it is permissible that a portion or whole of the above-mentioned inorganic small particle component may be transparent particles and yet one with its particle or small lumps previously coated with an inorganic or organic matter.

Such coating of transparent small particle component is realized by coating and hardening a resin on the surface of its transparent small particle component, or baking and coating an inorganic substance such as water glass, glaze for porcelain, light storing material, and UV light luminescent material, or the like. In any case, it should be done such that the coating of several µm ∼ several tens µm, for example, 5∼50 µm, more preferably 20∼30 µm or so, is performed on the particle surface of the transparent small particle component. To be more concrete, for example, using acrylic-based resin, methacrylic-based resin, unsaturated polyester-based resin, coating and hardening these resin compositions on the particle surface of the small particle component by heating 150∼300°C or so or irradiating light can be performed, or using water glass, glaze, etc., an inorganic coating can be performed by baking at a high temperature of 800∼1100°C or so.

These coatings greatly improve the affinity to the structure entirety of the small particle component functioning as aggregates of the artificial stone. Also, by mixing the fine particle component and the resin component, the strength becomes great and the hardness of the surface becomes good.

The small component utilizes transparent natural stone etc. as mentioned above, and the above-mentioned hard coating is performed to its surface, therefore, when the surface of the artificial stone product is polished, this coating layer is partly broken. Then, it follows that the surface structure of the particles and their surrounding layer of the partly exposed inorganic transparent small particle component obtains a unique effect for the reflection of light.

After all, it follows that light enters the transparent small particle component, is reflected by the coating of its surrounding, and passes again the transparent small particle component and is reflected. The phenomenon of light passage and reflection like this is essentially different from reflection of only the surface of the conventional artificial stone, imparting the unique deep feel to the artificial stone product of this invention. One obtains marble-like artificial stone of high quality having a massive deep feel.

The transparent small particle component having the coating layer as mentioned above can be made in general a ratio of 10∼100% in terms of the total amount of the inorganic small particle component to be incorporated into the composition.

Incidentally, in this invention, it is necessary that the size of the inorganic small particle component is also made one which is specific. That is, the inorganic small particle component is made a size of 10∼70 mesh as mentioned above. In the case etc. where it is desirable to impart a color densely up or down by using one which either has or does not have a color, it is considered to use by changing the size of particles according to the presence or absence of color, however, the mass use of one having an extreme difference should not be used because it deteriorates the strength of the product.

On the other hand, the size of particles of the fine particle component should be 100 mesh under as mentioned above. It should be one which sufficiently enters between the particles of the small particle component. To be more concrete, the one of 150 ∼ to 250 mesh or so is preferable.

In addition, what is important in the high-density artificial stone of this invention is, except for special cases, that it is desirable that these material compositions are uniformly dispersed in any part of the product.

The external surface of the product in this invention is to be previously polished or roughened prior to the softening and deformation by heating. The reason for performing previously the surface fabrication like this is that there would be no necessity of performing surface fabrication at all after the softening and deformation.

Polishing is indispensable for causing the compact structure state which the high-density artificial stone with a deep feel of this invention to be surface-exposed. As the means for polishing, it is possible to practice by using a tool of grind stone, grind cloth, grind belt, etc. or by using an abrasive of buff abrasive, rubbing compound, etc.

As the abrasive material, diamond, boron carbonate, corundum, alumina, and zirconia which perform mainly grinding action, and tripoly, dolomite, alumina, chromium oxide, cerium oxide, etc. which perform mainly polishing action, are properly used.

In the roughening of the surface, it is permissible to do such that the surface of the small particle component is exposed to the surface, as a typical means, roughening fabrication by water jet with jetting high-pressure water is exemplified. According to need, it is permissible to treat by an organic solvent, partly remove the resin component, or scrape from the surface part the resin component with a low hardness by a wire brush, cutting means etc.

And, in this invention, it is permissible to perform roughening fabrication previously so that the small particle component is exposed to the surface part.

As the method for this, at first, the selective removing method of the resin component is adopted. That is, for example, it is effective to perform surfacing fabrication by jetting high-pressure water to the surface of molded product after demolding from molding die.

This fabrication is not limitative because it differs depending on various conditions of thickness, distance from the nozzle, fabrication mode, etc. It is possible to make it the water pressure of 100∼1,300 kg/cm². This pressure becomes a water pressure condition lower than the case where natural stone is an object.

After all, by the presence of the resin component, the fabrication with high quality becomes possible more easily.

Regarding the nozzle and its system to jet high-pressure water, there are no specific restrictions. Those of various kinds are adopted.

By this surfacing fabrication, flattening or roughening by water jet is realized, with the texture of deep feel being possessed.

By the presence of the resin component, without the surface becoming whitened, and as compared with the etching method using chemicals, the disposal of waste liquid also becomes easy.

And, in the case of obtaining the artificial stone, it is an important problem to make the intended natural stone what color tone or design properties. Granite and marble are often made a target because it is difficult to obtain product from natural one and the color and luster are beautiful. In this case, its color and luster are an important theme which determines the value of granite and marble. In natural granite and marble, there are various kinds of color itself from completely black one to white one, or red one, and its degree differs even for the same color. Hitherto, in the case of imparting a color to various kinds of artificial stone, for example, to obtain a black one, it is permissible to use only black one of powdery or granular body of natural stone etc., but to obtain the one of intermediate color tone, the reproducibility becomes a problem. And, even if a color is imparted, it was difficult to impart a unique luster which marble possesses.

For example, even in the case where a color was imparted by using a dyestuff or pigment, it was difficult in the past to impart a luster and depth.

On the other hand, in this invention, a transparent one is used as the small particle component. For example, when it is intended to obtain one which possesses a luster of granite-tone or marble-tone, etc., it is possible to use as the small particle component small particles which one obtained crushing quartz-based natural stone.

Small particles which one obtained crushing quartz-based natural stone is, the surface has a unique smooth part because the raw material is quartz-based. Also in many cases, colorless and transparent. Even in the case of having colors, not so strong, even in the case of not transparent those which retain some transparency are many.

If one uses this raw material, the color of the product obtained can control by the coating layer of the small particle component and the color tone of the resin component. In addition, its color can impart depth and causes it to possess luster by the presence of the quartz-based small particle component of transparent properties.

For example, in the case of having the based layer of water glass containing white pigment or in the case of having the hardened layer of polyester-based unsaturated resin and in the case having used polyester-based unsaturated resin as the resin component, since the color the resin possesses is in general white containing some yellow taste, the product obtained becomes one of milky white with luster, it is possible to obtain a product of color tone very resembling natural milky white marble.

By making the coating layer one which causes it to contain coloring material of pigment, dye, etc., in addition, by adding to the resin component inorganic pigment of titanium dioxide, zirconium silicate, manganese dioxide, iron oxide, cobalt oxide, etc., organic pigment of phthalocyanine pigment, etc., or various dyes, it is possible to have a uniform color, causing it to have a unique color tone with depth and luster.

Incidentally, in the artificial stone composition of this invention, it is possible to impart color to the product, mixing using colored one of particle state of the approximately same size as the small particle component as the color component.

In any way, it is possible to secure much easily the reproducibility of color compared with conventional artificial stone, one superior in depth and luster without discoloration is obtained.

And, in the artificial stone of this invention, it is also particularly effective to apply glaze to color porcelain etc. to powdery granular body of the natural transparent small particle component, baking it into powdery granular body of desired color, use this as the small particle component. If one uses this method, not only is it possible to make color certain one but also it is possible to select widely.

If one uses the same one as the one crushed quartz-based natural stone and the one used as the small particle component, uses the one applied baked glaze to it, in the case of color such as black or red, there is no anxiety at all regarding the reproducibility of color, the color to be reproduced is not merely color itself but even something like luster and color tone is reproduced, therefore it becomes one absolutely unobtainable by the conventional coloring system.

In any way, the small particle component having formed the coating layer by this baking, uses in a ratio of 10∼100% of the total small particle component.

And, taking the color tone into consideration, one may incorporate a short fiber component for the structure reinforcement of the molded item. For example, it is possible to use glass fiber, ceramics fiber, metal fiber, resin fiber, etc. Above all, glass fiber is exemplified as a preferable one.

These short fibers are, in general, those of about 10∼100 µm in diameter, 1∼10 mm in length are used in a ratio of 1∼10 wt% or so of the small particle component.

Incidentally, the molding method to the plate-like forming body of the artificial stone used for this invention is variously selected. For example, cast molding, compression molding, etc. are properly considered.

For example, in compression molding method, to the lower receiving mold as the horizontal mold frame, casting material (mixing material) previously incorporated mixed as much as necessary in the composition after molding completion the small particle component, fine particle component and resin component, mating the upper mold, pressing with a surface pressure of 5∼100 kgf/cm², performing compression molding. And in this molding, at the time of compression, one heats at a temperature of about 90∼140°C for about 5∼20 minutes.

And, in this compression molding with heating, it is also possible to add vibration to the mold frame together with pressure, improve the flowability of the above-mentioned mixing material in the mold frame.

Below, we explain the example. Of course, this invention is not restricted by the following examples.

### EXAMPLES

### Example 1

Previously, using as 50 wt% of the total small particle component natural silicastone of particle diameter 10∼70 mesh provided in a thickness of about 30 µm with the surface baking layer at about 1000°C using white glaze, this small particle component and calcium carbonate of average particle diameter 230 mesh in its weight ratio 2:1, so that it becomes 87 wt% of the composition total weight, uniformly mixed into mortar state together with methyl methacrylate (MMA) of 11 wt% containing hardening agent of about 1.4 wt% in methyl methacrylate (MMA) component.

Casting this composition into a mold frame, formed into a plate-like body of thickness about 11 mm.

Then, polished the surface part using corundum abrasive material. By this, the small particle component having the baked coating layer caused to expose the partial cross section of its baked layer and the small particle component.

The resulting artificial stone, has a milky white color and luster of marble tone with depth, bubbles do not exist in the inside and surface, the composition was uniform.

In test according to the Japanese Industrial Standard JIS K-7112, specific gravity was 2.27. And, water absorption was 0.12%. Other characteristic properties were as in Table 1 below.

**Table 1**

| Item | Results | Test condition |
|---|---|---|
| Flexural strength | 31.30 kgf/cm | according to JIS A5209 |
| Compressive strength | 1400 kgf/cm² | Crosshead speed 0.5 mm/min load cell 2 ton |
| Impact strength | 4.58 kgf·cm/cm² | Pendulum-type impact test |
| Hardness | 1021 kgf/mm² | Vickers hardness according to JIS Z-2244 |
| Coefficient of linear expansion | 0.65 (× 10⁻⁵K) | TMA (30∼100°C) |
| Wear resistance | 0.03 g | JIS A5209 sand dropping type wear resistance test |

And, anomaly was not recognized also by acid resistance, alkali resistance test by 3% hydrochloric acid aqueous solution 8 hours immersion and 3% sodium hydroxide aqueous solution 8 hours immersion.

The plate-like artificial forming body having done polishing as above underwent bending fabrication by the system illustrated in Fig. 1. The conditions at this time were as follows.
- Plate-like forming body:: thickness 10.5 mm, size 300 × 390 mm
- Pedestal curvature radius:: R 250 mm
- Pedestal slope:: 45°
- Pressurized atmosphere:: air
- Pressure:: 4∼4.5 atms
- Heating temperature:: 160°C
- Heating:: rising temperature 10 minutes (from 20°C to 160°C) maximum temperature hold 15 minutes (160°C)
- Falling temperature:: falling temperature 10 minutes (from 160°C to 80°C) after that, natural falling temperature with the atmospheric pressure released.

Artificial forming body having a curved surface shape was obtained, local deformation or whitening was not recognized at all on the surface of this one. It was a high-quality artificial curved surface forming body.

### Example 2

In Example 1, the sum of the small particle component and the fine particle component was made 90%, the resin component containing hardening agent of about 2 wt% in MMA component was made 10%, the thickness of the surface baking layer of the small particle component was made 20 µm.

Similarly to Example 1, performed mirror polish fabrication, further removed the resin component of the surface part by pressure of water jet (pressure: 1200 kg/cm², nozzle diameter 0.8 mm, distance of nozzle 40 mm). High-quality artificial stone was obtained. It had characteristic properties of flexural strength 30.58 kgf/cm, compressive force 1385 kg/cm², hardness 1025 kgf/mm², had a superior surface with the depth of granite tone.

Performed curved surface molding in the same way as Example 1, obtained the high-quality product in the same way.

### Example 3

Regarding 15% of the total amount of natural silicastone as the small particle component, used one having done baking by thickness 25 µm blue glaze to particle surface.

Using one of this small particle component 10∼50 mesh, formed a plate-like body in the same way as Example 1.

Using diamond and alumina·zirconia abrasive material, polished.

A beautiful bluish white surface with depth was obtained.

Curved surface molding under the following conditions, obtained a high-quality product in the same way.
- Plate-like forming body:: thickness 15 mm, size 900 × 775 mm
- Pedestal curvature radius:: R 500 mm
- Pedestal slope:: 35°
- Pressurized atmosphere:: air
- Pressure:: 3.5 atms
- Heating temperature:: 145°C
- Heating:: rising temperature 15 minutes (from 20°C to 145°C) maximum temperature hold 20 minutes (145°C)
- Falling temperature:: 15 minutes (from 145°C to 70°C) after that, natural falling temperature with normal pressure recovered.

### INDUSTRIAL APPLICABILITY

As above, in this invention, high-density artificial molded product of curved surface or deformed shape, having good characteristic properties and color tone with depth and luster not obtained in the past is proposed. Moreover, the production of superior product like this becomes possible without being particularly expensive, because it does not need at all the step called curved surface polishing unlike the conventional method.

The product is one capable of being used as wall material, flooring material, pillar, etc. more widely than natural article as high quality article with depth.

## Claims

1. A method for manufacturing artificial stone having a curved surface or a deformed shape comprising the steps of heating a plate-like artificial stone forming body (1) whose surface (11) has previously been polished or roughened to a temperature ranging from 120°C to 200°C under a pressurized atmosphere equal to or higher than 3 atms so as to soften and deform it to a predetermined curved surface or deformed shape and cooling it to a temperature not higher than 90°C.

2. The manufacturing method of Claim 1 comprising installing a pedestal (2) having a predetermined curved surface (21) or a deformed shape in a pressure container, and causing the forming body softened by heating to deform to the shape of the pedestal by its own weight.

3. The manufacturing method of artificial stone of Claim 1 or 2 in which the artificial stone (1), in its composition, contains an inorganic mixture component consisting of an inorganic small particle component and an inorganic fine particle component, with the sum of the inorganic small particle component of size of 10∼70 mesh and the inorganic fine particle component of 100 mesh under being not less than 85 wt%, and a resin component less than 15 wt% of the product total amount.

4. The manufacturing method of artificial stone of Claim 3, in which the resin component is methacrylic resin.

5. The manufacturing method of artificial stone of Claim 3 or 4, in which the inorganic small particle component, regarding its part or whole, has an inorganic matter layer or an organic matter layer previously coated hardened on its surface.

## Patentansprüche

1. Verfahren zur Herstellung von Kunststein mit gekrümmter Oberfläche oder verformter Gestalt, umfassend die Schritte Erwärmen eines plattenartigen Kunststein-Formkörpers (1), dessen Oberfläche (11) zuvor poliert oder aufgerauht worden ist, auf eine Temperatur im Bereich von 120°C bis 200°C unter einer Druckatmosphäre, die 3 atm oder mehr entspricht, um ihn zu erweichen und ihn zu einer vorbestimmten gekrümmten Oberfläche oder verformten Gestalt zu verformen, und Abkühlen des Formkörpers auf eine Temperatur von nicht höher als 90°C.

2. Herstellungsverfahren nach Anspruch 1, umfassend das Anbringen eines Untersatzes (2) mit vorbestimmter gekrümmter Oberfläche (21) oder verformter Gestalt in einem Druckbehälter und das Herbeiführen der Verformung des durch Erwärmen erweichten Formkörpers durch sein eigenes Gewicht zu der Gestalt des Untersatzes.

3. Herstellungsverfahren für Kunststein nach Anspruch 1 oder 2, bei dem der Kunststein (1) in seiner Zusammensetzung eine Mischung aus anorganischen Komponenten, bestehend aus einer anorganischen kleinteiligen Komponente und einer anorganischen feinteiligen Komponente, wobei die Summe aus der anorganischen kleinteiligen Komponente mit einer Größe von 10∼70 Mesh und der anorganischen feinteiligen Komponente mit einer Größe von kleiner als 100 Mesh nicht weniger als 85 Gew.-% beträgt, und einer Harzkomponente, die weniger als 15 Gew.-% der Produkt-Gesamtmenge ausmacht, enthält.

4. Herstellungsverfahren für Kunststein nach Anspruch 3, bei dem die Harzkomponente Methacrylharz ist.

5. Herstellungsverfahren für Kunststein nach Anspruch 3 oder 4, bei dem die anorganische kleinteilige Komponente zum Teil oder vollständig eine Schicht aus anorganischer Materie oder eine Schicht aus organischer Materie besitzt, mit der sie zuvor überzogen und die auf ihrer Oberfläche gehärtet wurde.

## Revendications

1. Procédé de fabrication d'une pierre artificielle ayant une surface incurvée ou un corps déformé comprenant les étapes de chauffage d'un corps de formation de pierre artificielle en plaque (1) dont la surface (11) a été préalablement polie ou dégrossie à une température allant de 120°C à 200°C sous une atmosphère de pression égale ou supérieure à 3 atmosphères de manière à la ramollir et à la déformer pour obtenir une surface incurvée ou un corps déformé prédéterminé et à la refroidir à une température non supérieure à 90°C.

2. Procédé de fabrication selon la revendication 1, comportant les étapes consistant à installer un socle (2) ayant une surface incurvée ou un corps déformé prédéterminé(e) (21) dans un récipient sous pression et à amener le corps de formation ramolli par le chauffage à se déformer pour obtenir la forme du socle sous son propre poids.

3. Procédé de fabrication de pierre artificielle selon la revendication 1 ou 2, dans lequel la pierre artificielle (1), dans sa composition, contient un composant de mélange inorganique constitué d'un composant inorganique à petites particules et d'un composant inorganique à fines particules, la somme du composant inorganique à petites particules d'une taille de 10-70 mesh et du composant inorganique à fines particules d'une taille de 100 mesh ou moins n'étant pas inférieure à 85% en poids, et un composant résineux en quantité inférieure à 15% en poids de la quantité totale de produit.

4. Procédé de fabrication de pierre artificielle selon la revendication 3, dans lequel le composant résineux est une résine méthacrylique.

5. Procédé de fabrication de pierre artificielle selon la revendication 3 ou 4, dans lequel le composant inorganique à petites particules, en partie ou en totalité, a une couche de matériau inorganique ou une couche de matériau organique préalablement appliquée et durcie à sa surface.
